# FASCICULE DE BREVET EUROPEEN

(11) **EP 2 114 734 B1**
(45) Date de publication et mention de la délivrance du brevet: **01.05.2013**
(21) Numéro de dépôt: 07857606.3
(22) Date de dépôt: 14.12.2007
(51) Int. Cl.: B60R 25/00, B60R 25/02

(54) **ANTIVOL DE VEHICULE COMPRENANT UN BOITIER EQUIPE ET PROCEDE DE REALISATION DUDIT BOITIER**
DIEBSTAHLSICHERUNG FÜR EIN FAHRZEUG MIT AUSGESTATTETEM GEHÄUSE UND VERFAHREN ZUR HERSTELLUNG DIESES GEHÄUSES
VEHICLE ANTI-THEFT DEVICE INCLUDING AN EQUIPPED CASE AND METHOD FOR PRODUCING SAID CASE

(30) Priorité: 19.12.2006 FR 0611107
(43) Date de publication de la demande: 11.11.2009
(73) Titulaire: Valeo Sécurité Habitacle, 94046 Créteil Cedex (FR)
(72) Inventeur: GIACOMIN, FABRICE, 94042 Creteil (FR)
(74) Mandataire: Jacquot, Ludovic R. G.
(86) Numéro de dépôt international: PCT/EP2007/063972
(87) Numéro de publication internationale: WO 2008/074745

(56) Documents cités:
- EP-A1- 0 764 566
- EP-A2- 0 957 015
- FR-A1- 2 425 352
- US-A1- 2006 117 817

## Description

La présente invention concerne un antivol de véhicule comprenant un boîtier équipé entrant dans la composition d'un ensemble de verrouillage de la colonne de direction d'un véhicule.

Elle concerne également le procédé de réalisation dudit boîtier.

Elle a plus particulièrement comme objet, mais non exclusivement, un antivol de direction de véhicule automobile comportant un boîtier dans lequel un rotor est monté en rotation entre une position angulaire de repos (position appelée également position stop) dans lequel une clé adaptée peut être introduite axialement d'avant en arrière, ou retirée axialement d'arrière en avant, et au moins une position angulaire d'utilisation, dans laquelle la clé ne peut être extraite du rotor. Le rotor comporte un organe de sortie rotatif formant came qui est susceptible de coopérer avec un doigt de commande porté par un tirette pour commander les déplacements de ce dernier. La tirette est montée coulissante dans le boîtier selon une direction axiale, entre une position avant d'antivol vers laquelle il est sollicité élastiquement et dans laquelle il fait saillie axialement vers l'avant à travers une ouverture du boîtier pour bloquer en rotation un organe de la colonne de direction lorsque le rotor est en position de repos, clé extraite, et une position arrière escamotée à l'intérieur du boîtier.

Classiquement, le boîtier est réalisé monobloc ou en plusieurs parties séparées par un ou plusieurs plans sensiblement radiaux. Les principaux éléments internes au boîtier telle que la came sont montés axialement. Ce type de conception vient à l'esprit naturellement car il découle de l'état de l'art relatif à la fabrication standard par usinage à l'aide de tours ou de fraiseuses. Selon l'art antérieur des sous-ensembles comme la tirette équipé du doigt basculant étaient montés longitudinalement, parallèlement à l'axe de rotation du rotor. Cette architecture impose de concevoir des étagements de surface cylindriques toujours croissants pour pouvoir réaliser une pièce pouvant se démouler axialement facilement et permettre un montage axial des sous ensembles internes du boîtier. D'autre part cette architecture impose de prévoir des clipsages pour maintenir les différents sous-ensembles axialement après les avoir placés dans le boîtier. En effet principaux éléments internes au boîtier telle que la came sont montés axialement. Ce type de conception vient l'esprit naturellement car il découle de l'état de l'art relatif la fabrication standard par usinage à l'aide de tours ou de fraiseuses. Selon l'art antérieur des sous-ensembles comme la tirette équipé du doigt basculant étaient montés longitudinalement, parallèlement à l'axe de rotation du rotor. Cette architecture impose de concevoir des étagements de surface cylindriques toujours croissants pour pouvoir réaliser une pièce pouvant se démouler axialement facilement et permettre un montage axial des sous ensembles internes du boîtier. D'autre part cette architecture impose de prévoir des clipsages pour maintenir les différents sous-ensembles axialement après les avoir placés dans le boîtier. En effet ses sous-ensembles ont naturellement tendance à ressortir de leur logement après introduction longitudinale. Cette architecture impose donc des contraintes de réalisation de moules et des contraintes relatives à la nécessité de prévoir de nombreux clipsages et donc augmente le dimensionnement général, le coût et la masse de l'ensemble. En outre cette architecture ne permet pas d'utiliser dans un corps monobloc des cinématiques complexes dans lesquelles les axes de rotation et de translation ne sont pas coaxiaux. En outre cette architecture ne permet pas de réaliser des cavités d'allégement sans coût supplémentaire et sans ôter de la matière à la forme extérieure. En effet la matière située à l'extérieur du boîtier est nécessaire pour assurer la rigidité et la résistance à la flexion de l'ensemble. Le document US2006/0117817 propose un antivol comprenant un rotor, un stator et un élément de commande de verrouillage de colonne de direction Le document EP 0 764 566 propose un antivol motorisé dont l'élement de verrouillage est contenu entre deux coques.

Afin de remédier à ces inconvénients, l'invention rompt avec les préjugés relatifs aux architectures précédemment évoquées et propose un antivol de véhicule automobile, comprenant, logé au moins partiellement, à l'intérieur d'un boîtier, un mécanisme comportant au moins un ensemble stator/rotor et une came, le rotor étant actionnable depuis l'extérieur par une clé, et un organe de commande de verrouillage de la colonne de direction du véhicule, cet organe de commande étant mobile en translation, le boîtier étant composé par au moins deux coquilles moulées comprenant chacune des cavités aptes à recevoir au moins partiellement ledit mécanisme, ces coquilles étant assemblées l'une à l'autre selon une surface de jonction qui s'étend sensiblement axialement relativement à l'axe de rotation du rotor et à l'axe de déplacement de l'organe de commande de verrouillage.

Dans des modes de réalisation non limitatifs, l'invention présente des caractéristiques supplémentaires suivantes prises isolément ou en combinaison :
- les au moins deux coquilles pourront être réalisées en matériaux plastiques moulés sous pression.
- les matériaux plastiques moulés sous pression utilisés pourront inclure des fibres à haute résistance.
- les coquilles pourront être assemblées par des moyens d'encliquetage.
- les coquilles pourront être assemblées par des moyens de soudage.
- les moyens de soudage pourront être des moyens utilisant des rayons laser.
- des moyens de fixation d'un module de commutation pourront être présents sur chacune des deux parties respectivement prévues sur les deux coquilles.
- l'ensemble stator/rotor pourra comprendre un rotor en matière plastique et un stator intermédiaire métallique.
- le rotor pourra être clipsé sur la came.
- une protection magnétique pourra être placée sur une partie du boîtier lorsque celui-ci est assemblé.

L'invention propose également un procédé de réalisation d'un boîtier équipé pour antivol de véhicule entrant dans la composition d'un ensemble de verrouillage de la colonne de direction d'un véhicule, comprenant, logé au moins partiellement, à l'intérieur d'un boîtier, un mécanisme comportant au moins un ensemble stator/rotor et une came, le rotor étant actionnable depuis l'extérieur par une clé, et un organe de commande de verrouillage de la colonne de direction du véhicule, cet organe de commande étant mobile en translation, le procédé comprenant une séquence opératoire comportant :
- A) une étape de fabrication comportant :
   - la réalisation des au moins deux coquilles moulées, à savoir une première coquille, comprenant une première surface longitudinale de jonction qui s'étend sensiblement axialement relativement à l'axe de rotation du rotor et à l'axe de déplacement de l'organe de commande de verrouillage, et une deuxième coquille, comprenant une deuxième surface longitudinale de jonction qui s'étend sensiblement axialement relativement à l'axe de rotation du rotor et à l'axe de déplacement de l'organe de commande de verrouillage la came
   - la réalisation d'un mécanisme comprenant
      - l'ensemble stator/rotor
      - la came
      - la clé
      - l'organe de commande
- B) une étape d'assemblage comportant :
   - l'insertion radiale dans la première coquille d'au moins
      - la came
      - l'organe de commande de verrouillage
- C) une étape de fixation comportant le positionnement et la solidarisation des au moins deux coquilles en faisant coïncider la première surface longitudinale plane de jonction avec la deuxième.

Avantageusement, l'invention présente les caractéristiques supplémentaires suivantes prises isolément ou en combinaison :
- l'étape consistant à fabriquer les au moins deux coquilles pourra comprendre l'injection sous forte pression de matières plastiques éventuellement chargées de fibres à haute résistance,
- l'étape consistant à rendre solidaires les au moins deux coquilles pourra consister en un clipsage de la première coquille sur la deuxième coquille afin de les rendre solidaire l'une de l'autre après insertion radiale des sous-ensembles internes,
- l'étape consistant à rendre solidaires les au moins deux coquilles pourra être réalisée par soudage le long d'une partie du plan de contact des surfaces longitudinales planes de jonction des deux coquilles,
- l'étape consistant à rendre solidaires les au moins deux coquilles par soudage pourra être réalisée à l'aide de rayonnements laser,
- en outre une étape supplémentaire pourra consister à placer sur le boîtier un interrupteur sans contact clipsé après assemblage des deux coquilles,
- en outre une étape supplémentaire pourra consister à placer une protection magnétique sur une partie du boîtier lorsque celui-ci est assemblé.

Un mode de réalisation de l'invention sera décrit ci-après à titre d'exemple non limitatif, en faisant référence aux dessins annexés dans lesquels :

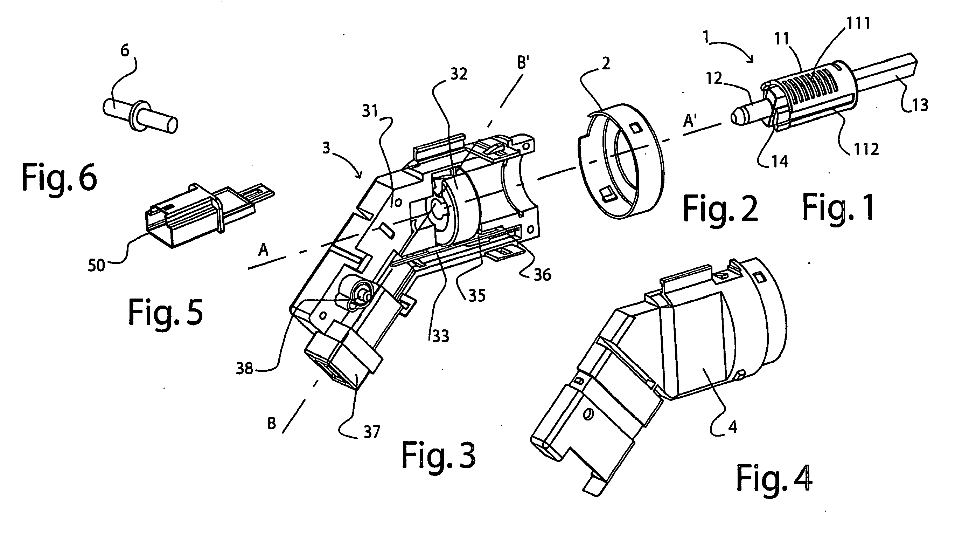

La figure 1 montre en perspective une vue simplifiée d'un ensemble stator/rotor.
La figure 2 montre en perspective une vue simplifiée d'un capot circulaire de protection magnétique.
La figure 3 montre en perspective une vue de la première coquille équipée.
La figure 4 montre en perspective une vue de la deuxième coquille.
La figure 5 montre en perspective une vue du module de commutation.
La figure 6 montre en perspective une vue du doigt de préemption.

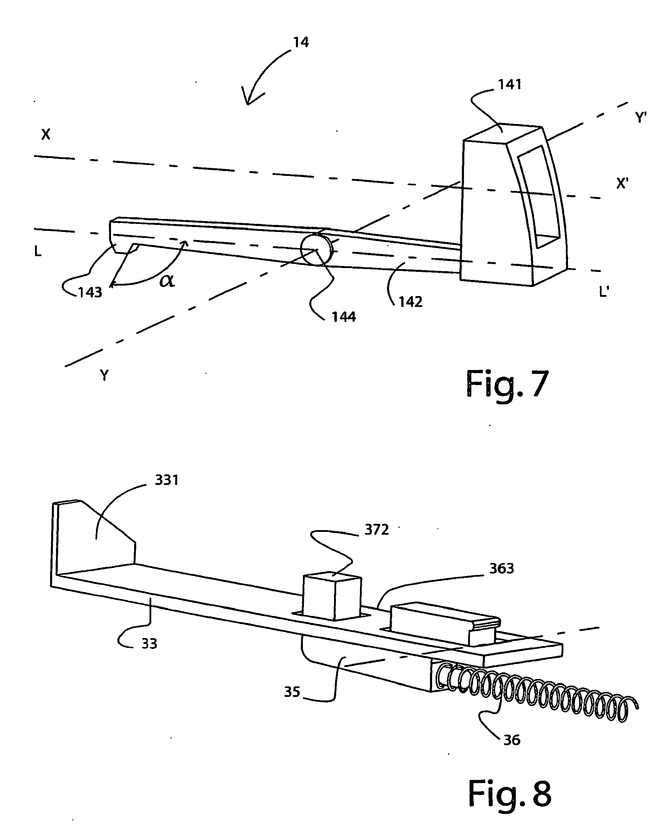

La figure 7 montre schématiquement une vue en perspective d'un levier basculant.
La figure 8 montre schématiquement une vue en perspective d'une tirette munie d'un doigt basculant.

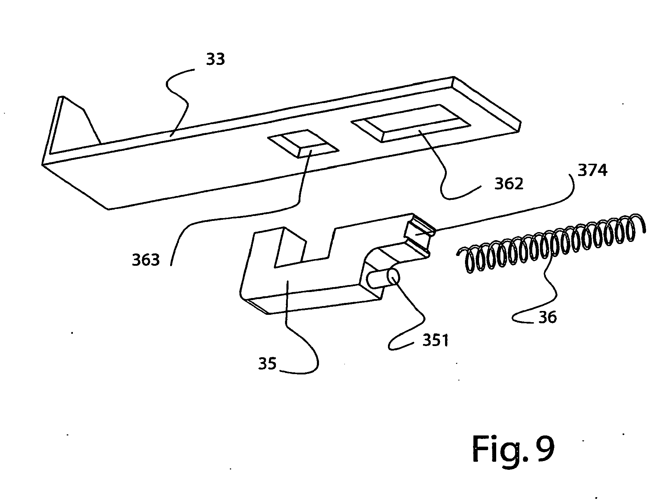

La figure 9 montre schématiquement une vue éclatée de la tirette, du doigt basculant et du ressort.
La figure 10 montre schématiquement une vue en perspective d'une came montée en bout de rotor.

Dans cet exemple, le boîtier d'antivol se compose de deux coquilles réalisées en matière plastique moulée.

Ces deux coquilles 3 et 4 sont destinées à s'assembler l'une à l'autre au niveau du plan d'assemblage et comprennent chacune deux parties axées obliquement l'une par rapport à l'autre, à savoir :
- une première partie d'axe AA' qui comporte débouchant dans le plan d'assemblage un évidement semi cylindrique étagé destiné à recevoir un ensemble barillet étagé ainsi qu'une cavité longitudinale qui s'étend parallèlement à l'axe de l'évidement cylindrique, cette cavité est destinée à recevoir un ensemble tirette/doigt basculant/ressort
- une deuxième partie d'axe BB' comportant une cavité sensiblement parallélépipédique débouchant dans le plan d'assemblage axée parallèlement à l'axe BB' et destinée à recevoir un guide pêne dans lequel est monté coulissant un pêne selon l'axe BB'. Cette deuxième partie comporte en outre un logement destiné à recevoir un doigt de préemption équipé.

Par ailleurs, la première partie de chacune des coquilles comprend sur sa face extérieures un demi profil d'assemblage par encliquetage qui comporte ici une demi glissière suivie d'un encliquetage. Le profil d'assemblage réalisé par les deux demi profils sert à recevoir un module de commutation qui vient s'engager par coulissement dans les deux demi glissières et s'encliqueter, en fin de course sur les crantages.

La fixation des deux coquilles s'effectue au niveau des faces d'assemblage par tout moyen connu tel que collage, soudure, thermocollage.
- L'ensemble stator/rotor équipé appelé également ensemble barillet 1 comprend dans cet exemple de réalisation un rotor en plastique 12 de forme circulaire comprenant en son centre un évidement permettant de laisser pénétrer une clé 13. Le rotor comprend en outre des rainures logeant des paillettes (non montrées sur la figure par soucis de clarté). Une excroissance de forme cylindrique ayant le même axe que le rotor prolonge le rotor du coté opposé à l'entrée de la clé. Un système de clipsage est prévu du coté opposé à l'entrée de la clé afin de solidariser le rotor avec la came.

Dans cet exemple, l'ensemble barillet comprend en son pourtour un stator intermédiaire métallique 11 comprenant des évidements 111 laissant passer les paillettes et une rainure 112 laissant passer le levier basculant. Ici le rotor est en plastique et est fabriqué par injection sous pression. Ici le stator intermédiaire est quant à lui en "Zamak" (marque déposée) moulé.

L'ensemble barillet vient se clipser à une came 32 réalisée en « Zamak » (marque déposée).

Le capot de protection magnétique 2 est ici fabriqué en acier magnétique à faible teneur en carbone. Il est obtenu par emboutissage à partir d'une tôle mince. Des pattes sont prévues pour que ce capot puisse venir se positionner fixement par clipsage sur la face avant du boîtier de l'antivol une fois qu'il est monté. Il comprend un orifice central pour laisser passer la clé 13.

La première coquille 3 comprend une partie avant de forme sensiblement demi cylindrique d'axe AA' comprenant un demi lamage de forme également sensiblement demi cylindrique prévu pour loger la came 32 et l'ensemble barillet 1. Une cavité demi cylindrique est prévue au fond de ce lamage pour servir de palier à l'excroissance du rotor. Une demi rainure longitudinale est prévue pour pouvoir loger et guider en translation une tirette 33 comprenant un doigt basculant 35 et un ressort de compression 36. Ce ressort pousse la tirette vers l'arrière du verrou du coté opposé à l'entrée de la clé et pousse également sur le doigt basculant vers l'intérieur du verrou.

Cette première coquille 3 comprend également une partie arrière de forme sensiblement demi parallélépipédique d'axe longitudinal incliné par rapport à l'axe AA'. Cette première coquille 3 comprend également une cavité longitudinale prévue pour recevoir la moitié du guide pêne et une partie de la moitié du pêne lui-même. Cette coquille comprend également un orifice circulaire permettant de recevoir un doigt de préhension cylindrique 6 comportant un épaulement cylindrique et un ressort de compression.

La deuxième coquille 4 comprend une partie avant de forme sensiblement demi cylindrique d'axe AA' comprenant un demi lamage de forme également sensiblement demi cylindrique prévu pour loger la came 32 et l'ensemble barillet 1. Une cavité demi cylindrique est prévue au fond de ce lamage pour servir de palier à l'excroissance du rotor. Une demi rainure longitudinale est prévue pour pouvoir loger et guider en translation une tirette 33 comprenant un doigt basculant 35 et un ressort de compression 36. Cette deuxième coquille 4 comprend également une partie arrière de forme sensiblement demi parallélépipédique d'axe longitudinal incliné par rapport à l'axe AA'. Cette deuxième coquille 4 comprend également une cavité longitudinale prévue pour recevoir la moitié du guide pêne et une partie de la moitié du pêne lui-même. Cette coquille comprend également un orifice circulaire permettant de recevoir un doigt de préhension cylindrique comportant un épaulement cylindrique.

Le levier basculant 14 comprend :
- un étrier 141 comprenant un orifice laissant passer la clé. La surface interne de l'orifice coopère avec la clé pour se placer dans une position haute lorsque la clé est dans le rotor, et se placer en position basse lorsque la clé est retirée du rotor
- un doigt de levier 143 comprenant une face de contact inclinée d'un angle α ici à 105 degrés par rapport à l'axe LL' du levier basculant 142 et situé du coté opposé à l'étrier par rapport à l'axe YY' du levier basculant
- un corps 142 de forme longiligne reliant l'étrier 141 au doigt de levier 143
- deux tétons 144 placés sensiblement au centre du levier et formant pivot autour de l'axe YY

Le ressort 36 travaille en compression. Il s'appuie à une de ses extrémités sur une protubérance 351 du doigt basculant et à l'autre extrémité sur la surface d'appui du boîtier.

La tirette 33 comprend à une extrémité une partie 331 permettant de le relier à un dispositif de verrouillage de la colonne de direction d'un véhicule, et à l'autre extrémité deux orifices successifs, à savoir, un orifice arrière 362 de forme rectangulaire et un orifice de forme rectangulaire avant 363.

Le doigt basculant 35 comprend un corps monobloc présentant d'un coté deux protubérances successives s'engageant respectivement au travers des deux orifices,
- la protubérance 372 de forme sensiblement parallélépipédique constitue un organe de blocage qui coopère avec le doigt de levier,
- la protubérance 363 sert à assurer la liaison pivotante entre le corps du doigt basculant 35 et la tirette 33. De forme sensiblement parallélépipédique elle comporte une concavité 374 dans laquelle s'engage un rebord de l'orifice du coulisseau de manière à former une charnière autour de laquelle le doigt basculant 35 peut basculer.
- un appui pour ressort 351 est placé sur le doigt basculant.

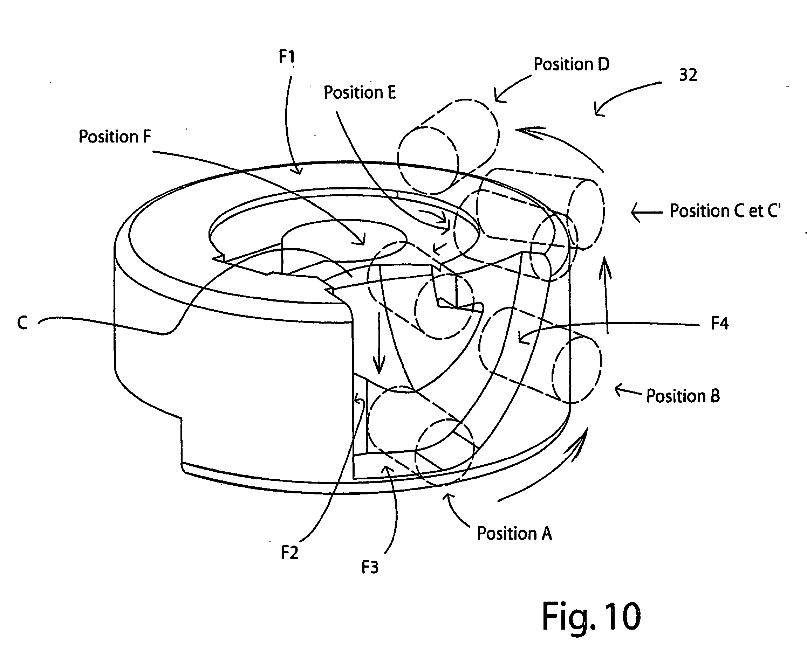

La came 32 est réalisée ici en « Zamak » (marque déposée) par moulage sous pression dans un moule métallique. Elle pourrait être en matières plastiques chargées éventuellement de fibres à hautes résistances. Elle comprend une rampe hélicoïdale permettant de guider un doigt basculant qui est solidaire de la tirette en translation longitudinale. Cette came est traversée par l'excroissance cylindrique du rotor de l'ensemble barillet et est maintenue solidaire du rotor par clipsage. Cette came présente un corps de forme générale cylindrique coaxiale au rotor, comportant une cavité débouchant au niveau de la face cylindrique par un orifice délimité successivement, à partir d'une première face radiale F1 du corps, par une face axiale F2, une face radiale F3 s'étendant à une faible distance de la deuxième face radiale du corps, et une face incurvée F4, sensiblement hélicoïdale qui se termine au niveau de la première face radiale du corps. Le fond de la cavité présente du coté de la première face radiale du corps une portion cylindrique adjacente à la face incurvée suivie d'une concavité ou dégagement de forme sensiblement parallélépipédique. Il présente en outre une forme en cuvette C constituant une sorte de rampe permettant le guidage du doigt basculant de la concavité à la face radiale cylindrique en suivant un trajet comportant un tronçon radial amenant le doigt contre la face incurvée, puis un tronçon incurvé le long de la face incurvée, pour parvenir enfin sur la portion cylindrique, avant de retrouver au droit de la concavité la première face radiale avant de revenir en regard de la concavité. La figure 10 décrit plus en détail les différentes étapes et la position relative du doigt basculant par rapport à la came. Le doigt étant en position A, la clé étant engagée, en tournant la clé le rotor et la came sont entraînés en rotation. Le doigt en suivant la rampe de la came (position B) entraîne avec lui le coulisseau longitudinalement. En position C le doigt basculant bascule et se rapproche de l'axe de rotation du rotor vers la position C'. En continuant la rotation de la clé et donc du rotor le doigt est maintenu à une position stable longitudinale jusqu'à la position D. Lorsque la clé est ramenée en position stop pour être enlevée, après avoir longé la surface F1 en passant par la position E, le doigt en arrivant en position F, sollicité par le ressort de compression, est entraîné par la rampe de la came de retour vers la position stop dés que la clé est insérée dans le rotor.

La tirette 33 est réalisée en acier et est obtenue par découpage et emboutissage en une seule opération à partir d'une tôle mince. La tirette équipée comprend un doigt basculant 33 dont le doigt 372 coopère avec la rainure hélicoïdale de la came et un ressort de compression 36 transmettant à la tirette un effort longitudinal d'avant en arrière et transmettant au doigt basculant un effort centripète.

Le pêne est réalisé en acier. Il est relié mécaniquement à la tirette 33. Il est de forme sensiblement parallélépipédique et coulisse dans la cavité prévue à cet effet dans les deux demi boîtiers. Le pêne agit sur un doigt de blocage de la direction du véhicule (non représenté).

Le guide pêne 37 est réalisé ici en « Zamak » (marque déposée). Il est obtenu par moulage sous pression dans un moule métallique. Il vient se placer dans la cavité prévue à cet effet dans les deux demi boîtiers. Un orifice intérieur parallélépipédique sert de guide au pêne.

Le doigt de préemption équipé 38 comprend un axe 6 comportant un épaulement, et un ressort de compression. Ce doigt est placé dans un orifice du boîtier prévu à cet effet.

Le module de commutation 50 comprend un circuit électronique incluant au moins une ampoule « Reed » sensible aux champs magnétiques, ainsi qu'une fiche de connexion à trois branches, le tout étant protégé par un boîtier en matière plastique. Cet interrupteur sans contact est guidé et clipsé dans une rainure formée après assemblage des deux demi boîtiers, cette rainure étant placée à l'extérieur du boîtier dans une région proche de la came qui porte les éléments magnétiques influençant les ampoules « Reed ».

L'assemblage des sous ensembles s'effectue de la façon suivante après fabrication des sous-ensembles :
Tout d'abord la première coquille est équipée. La came, la tirette équipée, le guide pêne et le pêne sont placés radialement dans les logements prévus à cet effet dans la première coquille. La deuxième coquille est positionnée contre la première coquille par contact des plans de jonction des deux demi boîtiers. Des clips de maintiens permettent de tenir provisoirement les au moins deux coquilles ensemble. Une soudure laser sur au moins une partie des arrêtes visibles des plans de jonction permet de donner à l'assemblage du boîtier la rigidité et la résistance nécessaire au bon fonctionnement de l'ensemble.

Puis le capot de protection magnétique est clipsé sur la partie avant du boîtier assemblé.

L'interrupteur sans contact est placé dans la rainure du boîtier prévue à cet effet.

Le boîtier équipé est donc terminé.

Il est ensuite possible de finaliser le verrou immédiatement ou plus tard en insérant axialement le barillet équipé dans le boîtier équipé. L'ensemble barillet équipé est alors introduit axialement dans le boîtier. Il est rentré par l'entrée du verrou et l'excroissance cylindrique du rotor vient se loger dans la cavité cylindrique prévue à cet effet dans le boîtier et vient se solidariser avec la came.

Le fonctionnement d'un tel dispositif est le suivant :
- En position de repos avant utilisation la clé est retirée du rotor. Le ressort pousse sur le doigt basculant qui à son tour pousse la tirette vers l'extérieur.
- En introduisant la clé dans l'étrier du levier basculant, on force sur la surface supérieure interne de l'étrier. Ceci conduit à faire tourner le levier basculant autour de son point de rotation et par voie de conséquence descendre le doigt 141
- En tournant la clé, le doigt basculant suit la came (surface F4). La tirette se déplace alors vers l'avant du rotor jusqu'à ce que le doigt basculant arrive sur la face interne de la came (surface F1). La tirette est alors dans la position rentrée.
- En revenant vers la position stop, le doigt basculant suit la face interne (surface F1) de la came qui est une surface plane perpendiculaire à l'axe AA'. Durant ce déplacement le doigt basculant et la tirette ne bougent pas. La tirette reste en position rentrée. En arrivant prés de la position stop le doigt basculant ne s'appuie plus sur la face avant de la came mais sur la face avant du doigt de levier qui empêche le doigt basculant de rentrer dans la rainure axiale (C) de la came.
- Lorsque on retire la clé, le ressort pousse le doigt basculant qui a tendance à appliquer une pression axiale sur le doigt de levier et compte tenu des pentes respective a tendance à faire tourner le levier pour faire monter le doigt de levier dans une cavité de la came prévue à cet effet et ainsi libérer le chemin pour que le doigt basculant et la tirette poussées par le ressort puissent se déplacer vers l'arrière.

On voit donc qu'il est possible de réaliser un boîtier équipé d'antivol de véhicule constitué par assemblage de deux coquilles se joignant sur un plan de joint longitudinal. La fabrication des deux coquilles est simplifiée dans la mesure où les formes des pièces comprennent peu de formes en contre dépouille. D'autre part le placement des sous ensembles internes est aisé dans la mesure où ce placement est radial et non axial. On peut également prévoir des cavités supplémentaires permettant un gain de poids sans évider la partie extérieure qui est nécessaire pour assurer la rigidité et la résistance du boîtier en flexion.

## Revendications

1. Antivol de véhicule automobile, comprenant, logé au moins partiellement, à l'intérieur d'un boîtier, un mécanisme comportant au moins un ensemble stator/rotor (1) et une came (32), le rotor étant actionnable depuis l'extérieur par une clé (13), et un organe de commande de verrouillage de la colonne de direction du véhicule, cet organe de commande étant mobile en translation, **caractérisé en ce que** le boîtier est composé par au moins deux coquilles moulées (3 et 4) comprenant chacune des cavités aptes à recevoir au moins partiellement ledit mécanisme, ces coquilles étant assemblées l'une à l'autre selon une surface de jonction qui s'étend sensiblement axialement relativement à l'axe de rotation du rotor et à l'axe de déplacement de l'organe de commande de verrouillage.

2. Antivol selon la revendication 1, **caractérisé en ce que** les au moins deux coquilles sont réalisées en matériaux plastiques moulés sous pression.

3. Antivol selon la revendication 2, **caractérisé en ce que** les matériaux plastiques moulés sous pression utilisés incluent des fibres à haute résistance.

4. Antivol selon la revendication 2 ou 3, **caractérisé en ce que** au moins deux coquilles sont assemblées par des moyens d'encliquetage.

5. Antivol selon la revendication 2, 3 ou 4, **caractérisé en ce que** au moins deux coquilles sont assemblées par des moyens de soudage.

6. Antivol selon la revendication 5, **caractérisé en ce que** les moyens de soudage sont des moyens utilisant des rayons laser.

7. Antivol selon l'une quelconque des revendications précédentes, **caractérisé en ce que** des moyens de fixation d'un module de commutation (50) sont présents sur chacune des deux parties respectivement prévues sur deux coquilles.

8. Antivol selon l'une quelconque des revendications précédentes, **caractérisé en ce que** l'ensemble stator/rotor comprend un rotor en matière plastique (12) et un stator intermédiaire métallique (11).

9. Antivol selon l'une quelconque des revendications précédentes, **caractérisé en ce que** le rotor (12) est clipsé sur la came (32),

10. Antivol selon l'une quelconque des revendications précédentes, **caractérisé en ce qu'**un capot en acier magnétique à faible teneur en carbone (2) est placé sur une partie du boîtier lorsque celui-ci est assemblé.

11. Procédé de réalisation d'un boîtier équipé pour antivol de véhicule entrant dans la composition d'un ensemble de verrouillage de la colonne de direction d'un véhicule, comprenant, logé nu moins partiellement, à l'intérieur d'un boîtier, un mécanisme comportant au moins un ensemble stator/rotor (1) et une came (32), le rotor étant actionnable depuis l'extérieur par une clé (13), et un organe de commande de verrouillage de la colonne de direction du véhicule, cet organe de commande étant mobile en translation, **caractérisé en ce qu'**il comprend une séquence opératoire comportant :
- A) une étape de fabrication comportant
- la réalisation des au moins deux coquilles moulées, à savoir une première coquille, comprenant une première surface longitudinale de Jonction qui s'étend sensiblement axialement relativement à l'axe de rotation du rotor et à l'axe de déplacement de l'organe de commande de verrouillage, et une deuxième coquille, comprenant une deuxième surface longitudinale de jonction qui s'étend sensiblement axialement relativement à l'axe de rotation du rotor et à l'axe de déplacement de l'organe de commande de verrouillage la came
- la réalisation d'un mécanisme comprenant
- l'ensemble stator/rotor
- la came
- la clé
- l'organe de commande
- B) une étape d'assemblage comportant
- l'insertion radiale dans la première coquille d'au moins
- la came
- l'organe de commande de verrouillage
- C) une étape de fixation comportant le positionnement et la solidarisation des au moins deux coquilles en faisant coïncider la première surface longitudinale plane de jonction avec la deuxième

12. Procédé selon la revendication 11, **caractérisé en ce qu'**il comprend en outre l'étape consistant à fabriquer les au moins deux coquilles par injection sous forte pression de matières plastiques éventuellement chargées de fibres à haute résistance.

13. Procédé selon la revendication 11 ou 12, **caractérisé en ce que** l'étape consistant à rendre solidaires les au moins deux coquilles consiste en au moins un clipsage de la première coquille sur la deuxième coquille afin de les rendre solidaire l'une de l'autre après insertion radiale des sous-ensembles internes.

14. Procédé suivant l'une quelconque des revendications 11 à 13, **caractérisé en ce que** l'étape consistant à rendre solidaires les au moins deux coquilles est réalisée par soudage le long d'une partie du plan de contact des surfaces longitudinales planes de jonction de deux coquilles.

15. Procédé suivant l'une quelconque des revendications 11 à 14, **caractérisé en ce que** l'étape consistant à rendre solidaires les au moins deux coquilles par soudage est réalisée à l'aide de rayonnements laser.

16. Procédé suivant l'une quelconque des revendications 11 à 15, **caractérisé en ce qu'**il comprend en outre l'étape consistant à placer sur le boîtier un interrupteur sans contact clipsé après assemblage des deux coquilles.

17. Procédé suivant l'une quelconque des revendications 11 à 16, **caractérisé en ce qu'**il comprend en outre l'étape consistant à placer un capot en acier magnétique à faible teneur en carbone (2) sur une partie du boîtier lorsque celui-ci est assemblé.

## Claims

1. Motor vehicle anti-theft device, comprising, housed at least partially inside a case, a mechanism comprising at least one stator/rotor assembly (1) and a cam (32), the rotor being operable from the outside via a key (13), and a vehicle steering column locking control member, this control member being translationally mobile, **characterized in that** the case is made up of at least two molded shells (3 and 4) each comprising cavities capable of at least partially accommodating said mechanism, these shells being assembled with one another along a joining surface which extends substantially axially relative to the axis of rotation of the rotor and to the axis of movement of the locking control member.

2. Anti-theft device according to Claim 1, **characterized in that** the at least two shells are made of pressure die cast plastics.

3. Anti-theft device according to Claim 2, **characterized in that** the pressure die cast plastics used include high-strength fibers.

4. Anti-theft device according to Claim 2 or 3, **characterized in that** at least two shells are assembled using snap-fastening means.

5. Anti-theft device according to Claim 2, 3 or 4, **characterized in that** at least two shells are assembled using welding means.

6. Anti-theft device according to Claim 5, **characterized in that** the welding means are means using laser beams.

7. Anti-theft device according to any one of the preceding claims, **characterized in that** means of attaching a switching module (50) are present on each of the two parts provided on two respective shells.

8. Anti-theft device according to any one of the preceding claims, **characterized in that** the stator/rotor assembly comprises a rotor (12) made of plastic and an intermediate stator (11) made of metal.

9. Anti-theft device according to any one of the preceding claims, **characterized in that** the rotor (12) is clipped onto the cam (32).

10. Anti-theft device according to any one of the preceding claims, **characterized in that** a magnetic low-carbon steel cap (2) is placed over part of the case when the case is assembled.

11. Method of creating a case assembly for a vehicle anti-theft device that forms part of an assembly for locking the steering column of a vehicle, comprising, housed at least partially inside a case, a mechanism comprising at least one stator/rotor assembly (1) and a cam (32), the rotor being operable from the outside via a key (13), and a vehicle steering column locking control member, this control member being translationally mobile, **characterized in that** it comprises an operating sequence involving:
- A) a manufacturing step involving
- creating the at least two molded shells, namely a first shell, comprising a first longitudinal joining surface which extends substantially axially relative to the axis of rotation of the rotor and to the axis of movement of the locking control member, and a second shell, comprising a second longitudinal joining surface which extends substantially axially relative to the axis of rotation of the rotor and to the axis of movement of the locking control member of the cam
- creating a mechanism comprising
- the stator/rotor assembly
- the cam
- the key
- the control member
- B) an assembly step involving
- radially inserting at least
- the cam
- the locking control member
in the first shell
- C) a fastening step involving positioning and joining the at least two shells, making the first longitudinal planar joining surface coincide with the second.

12. Method according to Claim 11, **characterized in that** it further comprises the step that consists in manufacturing the at least two shells by the highpressure injection molding of plastics, possibly filled with high-strength fibers.

13. Method according to Claim 11 or 12, **characterized in that** the step that consists in joining the at least two shells together consists in at least one clipping of the first shell onto the second shell in order to join the two together after the internal subassemblies have been inserted radially.

14. Method according to any one of Claims 11 to 13, **characterized in that** the step that consists in joining the at least two shells together is performed by welding along part of the plane of contact of the longitudinal planar joining surfaces of two shells.

15. Method according to any one of Claims 11 to 14, **characterized in that** the step that consists in joining the at least two shells together by welding is performed using laser beams.

16. Method according to any one of Claims 11 to 15, **characterized in that** it further comprises the step that consists in placing a contactless switch on the case after the two shells have been assembled.

17. Method according to any one of Claims 11 to 16, **characterized in that** it further comprises the step that consists in placing a magnetic low-carbon steel cap (2) over part of the case when the latter has been assembled.

## Patentansprüche

1. Kraftfahrzeug-Diebstahlsicherung, die, zumindest teilweise im Inneren eines Gehäuses untergebracht, einen Mechanismus, der mindestens eine Stator-/Rotor-Einheit (1) und eine Nockenscheibe (32) aufweist, wobei der Rotor von außen mittels eines Schlüssels (13) betätigt werden kann, und ein Element zur Steuerung der Verriegelung der Lenksäule des Fahrzeugs enthält, wobei dieses Steuerelement translationsbeweglich ist, **dadurch gekennzeichnet, dass** das Gehäuse aus mindestens zwei geformten Schalen (3 und 4) besteht, die je Hohlräume enthalten, welche in der Lage sind, den Mechanismus zumindest teilweise aufzunehmen, wobei diese Schalen gemäß einer Verbindungsfläche miteinander zusammengebaut werden, die sich im Wesentlichen axial bezüglich der Drehachse des Rotors und der Verschiebeachse des Verriegelungssteuerelements erstreckt.

2. Diebstahlsicherung nach Anspruch 1, **dadurch gekennzeichnet, dass** die mindestens zwei Schalen aus druckgeformten Kunststoffen hergestellt sind.

3. Diebstahlsicherung nach Anspruch 2, **dadurch gekennzeichnet, dass** die verwendeten druckgeformten Kunststoffe hochfeste Fasern enthalten.

4. Diebstahlsicherung nach Anspruch 2 oder 3, **dadurch gekennzeichnet, dass** mindestens zwei Schalen durch Einrasteinrichtungen zusammengebaut werden.

5. Diebstahlsicherung nach Anspruch 2, 3 oder 4, **dadurch gekennzeichnet, dass** mindestens zwei Schalen durch Schweißeinrichtungen zusammengebaut werden.

6. Diebstahlsicherung nach Anspruch 5, **dadurch gekennzeichnet, dass** die Schweißeinrichtungen Laserstrahlen verwendende Einrichtungen sind.

7. Diebstahlsicherung nach einem der vorhergehenden Ansprüche, **dadurch gekennzeichnet, dass** Befestigungseinrichtungen eines Schaltmoduls (50) auf jedem der zwei Teile vorhanden sind, die auf zwei Schalen vorgesehen sind.

8. Diebstahlsicherung nach einem der vorhergehenden Ansprüche, **dadurch gekennzeichnet, dass** die Stator-/Rotor-Einheit einen Rotor aus Kunststoff (12) und einen metallischen Zwischenstator (11) enthält.

9. Diebstahlsicherung nach einem der vorhergehenden Ansprüche, **dadurch gekennzeichnet, dass** der Rotor (12) auf der Nockenscheibe (32) clipbefestigt wird.

10. Diebstahlsicherung nach einem der vorhergehenden Ansprüche, **dadurch gekennzeichnet, dass** eine Kappe aus Magnetstahl mit geringem Kohlenstoffgehalt (2) auf einem Teil des Gehäuses angeordnet wird, wenn dieses zusammengebaut ist.

11. Verfahren zur Herstellung eines zur Diebstahlsicherung eines Fahrzeug ausgestatteten Gehäuses, das zur Zusammensetzung einer Verriegelungseinheit der Lenksäule eines Fahrzeugs gehört, die, zumindest teilweise im Inneren eines Gehäuses untergebracht, einen Mechanismus, der mindestens eine Stator-/Rotor-Einheit (1) und eine Nockenscheibe (32) aufweist, wobei der Rotor von außen mittels eines Schlüssels (13) betätigt werden kann, und ein Element zur Steuerung der Verriegelung der Lenksäule des Fahrzeugs enthält, wobei dieses Steuerelement translationsbeweglich ist, **dadurch gekennzeichnet, dass** es eine Betriebssequenz enthält, die aufweist:
- A) einen Herstellungsschritt, der aufweist
- die Herstellung der mindestens zwei geformten Schalen, nämlich einer ersten Schale, die eine erste Längsverbindungsfläche enthält, die sich im Wesentlichen axial bezüglich der Drehachse des Rotors und der Verschiebeachse des Verriegelungssteuerelements erstreckt, und einer zweiten Schale, die eine zweite Längsverbindungsfläche enthält, die sich im Wesentlichen axial bezüglich der Drehachse des Rotors und der Verschiebeachse des Verriegelungssteuerelements der Nockenscheibe erstreckt,
- die Herstellung eines Mechanismus, der enthält
- die Stator-/Rotor-Einheit
- die Nockenscheibe
- den Schlüssel
- das Steuerelement
- B) einen Zusammenbauschritt, der aufweist
- die radiale Einführung in die erste Schale mindestens
- der Nockenscheibe
- des Verriegelungssteuerelements
- C) einen Befestigungsschritt, der die Positionierung und die feste Verbindung der mindestens zwei Schalen aufweist, indem die erste ebene Längsverbindungsfläche mit der zweiten in Übereinstimmung gebracht wird.

12. Verfahren nach Anspruch 11, **dadurch gekennzeichnet, dass** es außerdem den Schritt enthält, der darin besteht, die mindestens zwei Schalen durch Hochdruckspritzguss von ggf. mit hochfesten Fasern angereicherten Kunststoffen herzustellen.

13. Verfahren nach Anspruch 11 oder 12, **dadurch gekennzeichnet, dass** der Schritt, der darin besteht, die mindestens zwei Schalen fest miteinander zu verbinden, aus mindestens einer Clipbefestigung der ersten Schale an der zweiten Schale besteht, um sie nach der radialen Einführung der inneren Teileinheiten fest miteinander zu verbinden.

14. Verfahren nach einem der Ansprüche 11 bis 13, **dadurch gekennzeichnet, dass** der Schritt, der darin besteht, die mindestens zwei Schalen fest miteinander zu verbinden, durch Schweißen entlang eines Teils der Kontaktebene der ebenen Längsverbindungsflächen von zwei Schalen durchgeführt wird.

15. Verfahren nach einem der Ansprüche 11 bis 14, **dadurch gekennzeichnet, dass** der Schritt, der darin besteht, die mindestens zwei Schalen durch Schweißen fest miteinander zu verbinden, mit Hilfe einer Laserstrahlung durchgeführt wird.

16. Verfahren nach einem der Ansprüche 11 bis 15, **dadurch gekennzeichnet, dass** es außerdem den Schritt enthält, der darin besteht, auf dem Gehäuse einen kontaktlosen Schalter anzuordnen, der nach dem Zusammenbau der zwei Schalen clipbefestigt wird.

17. Verfahren nach einem der Ansprüche 11 bis 16, **dadurch gekennzeichnet, dass** es außerdem den Schritt enthält, der darin besteht, eine Kappe aus Magnetstahl mit geringem Kohlenstoffgehalt (2) auf einem Teil des Gehäuses anzuordnen, wenn dieses zusammengebaut ist.
